# EUROPÄISCHE PATENTSCHRIFT

(11) **EP 1 833 690 B1**
(45) Veröffentlichungstag und Bekanntmachung des Hinweises auf die Patenterteilung: **16.03.2011**
(21) Anmeldenummer: 05801446.5
(22) Anmeldetag: 05.10.2005
(51) Int. Cl.: B60G 17/00

(54) **FAHRWERK FÜR EIN KRAFTFAHRZEUG**
CHASSIS FOR A MOTOR VEHICLE
MECANISME DE ROULEMENT POUR UN VEHICULE A MOTEUR

(30) Priorität: 15.11.2004 DE 102004055050
(43) Veröffentlichungstag der Anmeldung: 19.09.2007
(73) Patentinhaber: Continental Automotive GmbH, 30165 Hannover (DE)
(72) Erfinder: BERBERICH, Reinhold, 60439 Frankfurt (DE)
(86) Internationale Anmeldenummer: PCT/EP2005/054996
(87) Internationale Veröffentlichungsnummer: WO 2006/051025

(56) Entgegenhaltungen:
- EP-A- 0 542 573
- DE-A1- 3 833 891
- DE-A1- 4 427 559
- US-B1- 6 298 958
- PATENT ABSTRACTS OF JAPAN Bd. 018, Nr. 051 (M-1548), 26. Januar 1994 (1994-01-26) & JP 05 272571 A (BRIDGESTONE CORP), 19. Oktober 1993 (1993-10-19)

## Beschreibung

Die Erfindung bezieht sich auf ein Fahrwerk für ein Kraftfahrzeug, mit einer elektrisch betreibbaren Fahrwerkskomponente, die eine Kontakteinheit aufweist, mit der eine an einem Ansteuerkabel angeordnete Gegenkontakteinheit lösbar verbindbar ist.

Bei derartigen Fahrwerkskomponenten wie z. B. Schwingungsdämpfern mit veränderbarer Dämpfkraft kann eine Kontaktierung mittels einer mit der Kontakteinheit lösbar verbindbaren Gegenkontakteinheit erfolgen.

Soll ein Beschleunigungssensor dem Schwingungsdämpfer noch zugeordnet werden, muss der Dämpfer dafür modifiziert werden, indem eine Halterung oder ein Flansch zur Befestigung des Beschleunigungsgebers angebracht wird. Gleichzeitig ist neben dem Anschlusskabel für die Fahrwerkskomponente noch ein weiteres Kabel für den Beschleunigungssensor erforderlich.

Aus der DE 44 27 559 A1 ist ein Fahrwerk für ein Kraftfahrzeug bekannt, das einen Schwingungsdämpfer mit veränderbarer Dämpfkraft aufweist. An einem Behälterrohr des Schwingungsdämpfers ist ein radial gerichteter Rohrstutzen fest angeordnet, an dem mittels einer Überwurfmutter eine Baueinheit befestigbar ist, die aus einer Ventilbaugruppe, einem Stellantrieb für die Ventilbaugruppe und einem Beschleunigungssensor besteht.

In die Kunststoffummantelung der Baueinheit mündet abgedichtet ein Anschlusskabelabschnitt, der zu dem Stellantrieb führende Verbindungsleitungen und zu dem Beschleunigungssensor führende Verbindungsleitungen integral miteinander verbindet. Aus der DE-C1-38 07 913 ist ein Fahrwerk mit einer elektrisch betreibbaren Fahrwerkskomponente bekannt, die eine Kontakteinheit aufweist, mit der eine an einem Ansteuerkabel angeordnete Gegenkontakteinheit lösbar verbindbar ist. Die Kontakteinheit ist unmittelbar am Spulenträger der Spule des elektromagnetischen Ventils der Fahrwerkskomponente angeordnet.

Aufgabe der Erfindung ist es daher ein Fahrwerk der eingangs genannten Art mit Beschleunigungsmessung zu schaffen, das einen einfachen, nur wenige separate Bauteile aufweisenden Aufbau zur Kontaktierung besitzt.

Diese Aufgabe wird erfindungsgemäß dadurch gelöst, dass die Gegenkontakteinheit einen oder mehrere Beschleunigungssensoren aufweist, die Anschlusskabel besitzen.

Dabei können die Beschleunigungssensoren auch mehrachsige Beschleunigungssensoren sein.

Durch diese Ausbildung bilden Gegenkontakteinheit und Beschleunigungssensor ein einziges Bauteil mit einem einzigen Gehäuse, wodurch sowohl der Montageaufwand als auch die Lagerhaltung der Bauteile erheblich reduziert wird.

Auch ist je nach Bedarf problemlos eine Gegenkontakteinheit mit oder ohne Beschleunigungssensor bei identischen Fahrwerkskomponenten anwendbar.

Allein die verwendete Gegenkontakteinheit mit oder ohne Beschleunigungssensor bestimmt die Sensorkonfiguration.

Durch die Verwendung von Gegenkontakteinheiten mit Beschleunigungssensor können bereits bestehende Fahrwerkskomponenten mit einer zusätzlichen Funktionalität versehen werden.

Störanfällige Steckkontakte für separat angeordnet Beschleunigungssensoren entfallen.

Darüber hinaus bildet die Gesamteinheit der Gegenkontakteinheit einen mechanischen Schutz gegen Beschädigungen des Beschleunigungssensors während des Transports oder des Montageprozesses der Gegenkontakteinheit.

Fahrwerkskomponenten können z. B. magnetorheologische Dämpfer oder aktive Verstellelemente wie Plunger (Hydraulikzylinder zwischen Feder und Rad) sein.

Besonders vorteilhaft ist es, wenn die Fahrwerkkomponente eine Schwingungsdämpfereinrichtung mit veränderbarer Dämpfkraft ist, die einen Zylinder und einen den mit einer Dämpfflüssigkeit gefüllten Innenraum des Zylinders in eine erste Fluidkammer und eine zweite Fluidkammer unterteilenden Kolben aufweist, mit einer die Fluidkammern miteinander verbindenden Fluidverbindung, mit einer mit dem Kolben verbundenen Kolbenstange, die durch die erste Fluidkammer abgedichtet aus dem Zylinder herausgeführt ist sowie mit einer an dem Zylinder oder der Kolbenstange befestigten Ventileinheit zum Einstellen des Durchtrittsquerschnitts der Fluidverbindung, wobei die Ventileinheit einen elektrischen Stellantrieb und die Kontakteinheit aufweist.

Dies ermöglicht es auch dann, wenn nur ein Teil der Schwingungsdämpfereinrichtungen des Kraftfahrzeugs mit Beschleunigungssensoren versehen werden sollen, alle Schwingungsdämpfereinrichtungen identisch und nur die Gegenkontakteinheiten unterschiedlich auszuführen.

Die Gegenkontakteinheiten können je nach dem Bedarf an dem radseitigen Teil zur Erfassung von dessen Beschleunigungskräften oder an dem karosserieseitigen Teil zur Erfassung der Beschleunigungskräfte an der Karosserie angeordnet sein.

Es ist sowohl möglich, dass der Beschleunigungssensor in die Gegenkontakteinheit als auch in einen Adapter integriert ist, über den die Gegenkontakteinheit lösbar mit der Kontakteinheit verbindbar ist.

Zur weiteren Integration und Montagevereinfachung kann das Anschlusskabel mit dem Ansteuerkabel eine Kabeleinheit bilden.

Eine schnelle Kontaktierung ist dadurch möglich, dass Kontakteinheit und Gegenkontakteinheit einen Steckkontakt bilden.

Die Kontakteinheit kann über ein Kabel mit der Fahrwerkskomponente verbunden sein, wobei die Kontakteinheit an der Fahrwerkskomponente vorzugsweise an einem Halter des Zylinders lösbar befestigbar ist.

Ausführungsbeispiele der Erfindung sind in der Zeichnung dargestellt und werden im Folgenden näher beschrieben. Es zeigen:
- Figur 1: eine perspektivische Ansicht eines ersten Ausfüh- rungsbeispiels einer Schwingungsdämpfereinrich- tung
- Figur 2: eine Prinzipdarstellung der Schwingungsdämpfer- einrichtung nach Figur 1
- Figur 3: eine Prinzipdarstellung eines zweiten Ausfüh- rungsbeispiels einer Schwingungsdämpfereinrich- tung mit gelöster Gegenkontakteinheit
- Figur 4: eine Prinzipdarstellung der Schwingungsdämpfer- einrichtung nach Figur 3 mit kontaktierter Gegen- kontakteinrichtung.

Die dargestellten Schwingungsdämpfereinrichtungen für ein Kraftfahrzeug weisen einen Zylinder 1 auf, dessen Innenraum von einem nicht dargestellten Kolben unterteilt ist, von dem eine Kolbenstange 2 abgedichtet nach außen geführt ist.

An dem freien Ende der Kolbenstange 2 ist ein nicht dargestelltes Gelenkauge und an dem der Kolbenstange 2 entgegen gesetzten Ende des Zylinders 1 ebenfalls ein Gelenkauge 3 angeordnet.

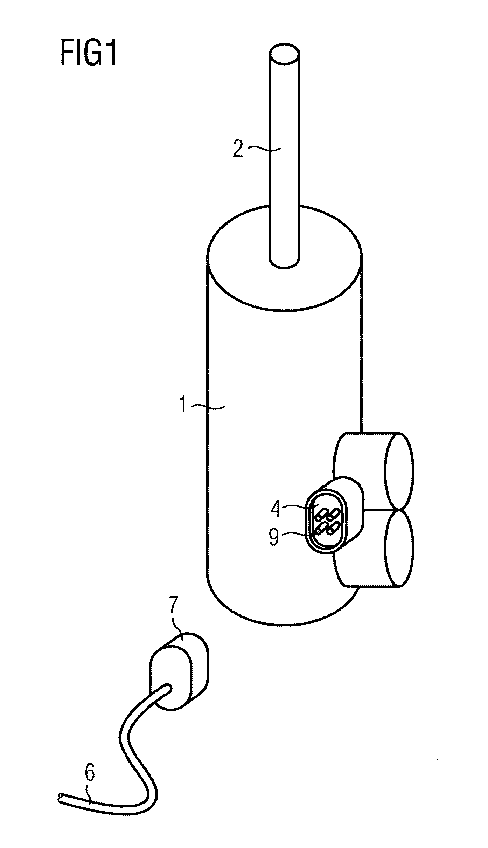

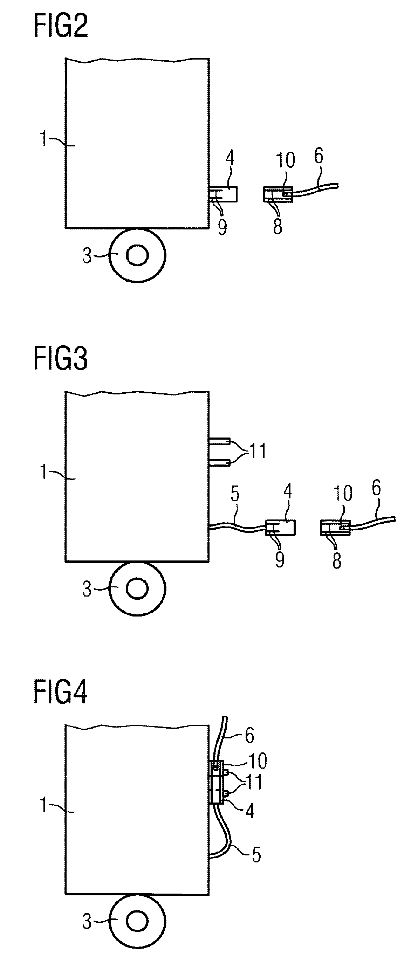

An dem Zylinder 1 ist in den Figuren 1 und 2 unmittelbar und fest und in den Figuren 3 und 4 über ein Kabel 5 eine Kontakteinheit 4 mit Kontaktstiften 9 angeordnet.

An einer zu einer nicht dargestellten Karosserie des Kraftfahrzeugs führenden Kabeleinheit 6 ist eine Gegenkontakteinheit mit Kontaktbuchsen 8 angeordnet, die mit der Kontakteinheit 4 einen zusammenensteckbaren Steckkontakt bilden. In der Gegenkontakteinheit 7 ist weiterhin ein Beschleunigungssensor 10 angeordnet.

Das Ansteuerkabel der Gegenkontakteinheit 7 und das Anschlusskabel des Beschleunigungssensors 10 sind zu der Kabeleinheit 6 zusammengefasst.

Bei dem Ausführungsbeispiel der Figuren 3 und 4 sind an dem Zylinder 1 Klippse 11 angeordnet, in die bei ineinandergesteckter Kontakteinheit 4 und Gegenkontakteinheit 7 diese Gesamteinheit durch Einklippsen an dem Zylinder 1 befestigbar ist (Figur 4).

## Patentansprüche

1. Fahrwerk für ein Kraftfahrzeug, mit einer elektrisch betreibbaren Fahrwerkskomponente, die eine Kontakteinheit aufweist, mit der eine an einem Ansteuerkabel angeordnete Gegenkontakteinheit lösbar verbindbar ist, **dadurch gekennzeichnet , dass** die Gegenkontakteinheit (7) einen oder mehrere Beschleunigungssensoren (10) aufweist, die Anschlusskabel besitzen.

2. Fahrwerk nach Anspruch 1, **dadurch gekennzeichnet, dass** die Fahrwerkskomponente eine Schwingungsdämpfereinrichtung mit veränderbarer Dämpfkraft ist, die einen Zylinder (1) und einen den mit einer Dämpfflüssigkeit gefüllten Innenraum des Zylinders (1) in eine erste Fluidkammer und eine zweite Fluidkammer unterteilenden Kolben aufweist, mit einer die Fluidkammern miteinander verbindenden Fluidverbindung, mit einer mit dem Kolben verbundenen Kolbenstange (2), die durch die erste Fluidkammer abgedichtet aus dem Zylinder (1) herausgeführt ist sowie mit einer an dem Zylinder (1) oder der Kolbenstange (2) befestigten Ventileinheit zum Einstellen des Durchtrittsquerschnitts der Fluidverbindung, wobei die Ventileinheit einen elektrischen Stellantrieb und die Kontakteinheit (4) aufweist.

3. Schwingungsdämpfereinrichtung nach einem der vorhergehenden Ansprüche, **dadurch gekennzeich**n e t , dass der Beschleunigungssensor (10) in die Gegenkontakteinheit (7) integriert ist.

4. Schwingungsdämpfereinrichtung nach einem der Ansprüche 1 und 2, **dadurch gekennzeichnet , dass** der Beschleunigungssensor in einen Adapter integriert ist, über den die Gegenkontakteinheit lösbar mit der Kontakteinheit verbindbar ist.

5. Schwingungsdämpfereinrichtung nach einem der vorhergehenden Ansprüche, **dadurch gekennzeichnet, dass** das Anschlusskabel mit dem Ansteuerkabel eine Kabeleinheit (6) bildet.

6. Schwingungsdämpfereinrichtung nach einem der vorhergehenden Ansprüche, **dadurch gekennzeichnet, dass** Kontakteinheit (4) und Gegenkontakteinheit (7) einen Steckkontakt bilden.

7. Schwingungsdämpfereinrichtung nach einem der vorhergehenden Ansprüche, **dadurch gekennzeichnet, dass** die Kontakteinheit (4) über ein Kabel (5) mit der Fahrwerkskomponente verbunden ist, wobei die Kontakteinheit (4) an der Fahrwerkskomponente lösbar befestigbar ist.

8. Schwingungsdämpfereinrichtung nach einem der Ansprüche 2 und 7, **dadurch gekennzeichnet , dass** die Kontakteinheit (4) an einem Halter des Zylinders (1) lösbar befestigbar ist.

## Claims

1. Chassis for a motor vehicle, with an electrically driven chassis component which has a contact unit which can be detachably connected to a mating contact unit arranged on a control cable, **characterized in that** the mating contact unit (7) has one or more acceleration sensors (10) which have connection cables.

2. Chassis according to Claim 1, **characterized in that** the chassis component is a vibration damper device with variable damping force, which has a cylinder (1) and a piston dividing the interior of the cylinder (1), which is filled with a damping fluid, into a first fluid chamber and a second fluid chamber, with a fluid connection connecting the fluid chambers to each other, with a piston rod (2) which is connected to the piston and is brought out of the cylinder (1) in a sealed manner through the first fluid chamber, and with a valve unit, which is fastened to the cylinder (1) or the piston rod (2), for setting the passage cross section of the fluid connection, the valve unit having an electric actuating drive and the contact unit (4).

3. Vibration damper device according to one of the preceding claims, **characterized in that** the acceleration sensor (10) is integrated into the mating contact unit (7).

4. Vibration damper device according to either of Claims 1 and 2, **characterized in that** the acceleration sensor is integrated into an adapter via which the mating contact unit can be detachably connected to the contact unit.

5. Vibration damper device according to one of the preceding claims, **characterized in that** the connection cable forms a cable unit (6) with the control cable.

6. Vibration damper device according to one of the preceding claims, **characterized in that** contact unit (4) and mating contact unit (7) form a plug-in contact.

7. Vibration damper device according to one of the preceding claims, **characterized in that** the contact unit (4) is connected to the chassis component via a cable (5), with the contact unit (4) being able to be fastened detachably to the chassis component.

8. Vibration damper device according to either of Claims 2 and 7, **characterized in that** the contact unit (4) can be fastened detachably to a holder of the cylinder (1).

## Revendications

1. Châssis pour un véhicule automobile, comportant un composant de châssis à entraînement électrique, qui a une unité de contact avec laquelle une contre-unité de contact montée sur un câble de commande peut être reliée d'une façon amovible, **caractérisé par le fait que** la contre-unité de contact (7) comporte un ou plusieurs détecteurs d'accélération (10), lesquels ont des câbles de raccordement.

2. Châssis selon la revendication 1, **caractérisé par le fait que** le composant de châssis est un dispositif d'amortissement de vibrations à force d'amortissement variable qui a un cylindre (1) et un piston partageant la cavité intérieure du cylindre (1) remplie d'un liquide d'amortissement en une première chambre à fluide et une deuxième chambre à fluide, avec une liaison pour le fluide reliant l'une à l'autre les chambres à fluide, avec une bielle (2) de piston reliée au piston, laquelle sort, d'une façon étanche, du cylindre (1) à travers la première chambre à fluide, ainsi qu'avec une unité faisant soupape fixée au cylindre (1) ou à la bielle (2) du piston et permettant de régler la section transversale de transit de la liaison pour le fluide, l'unité faisant soupape comportant une commande électrique de réglage et l'unité de contact (4).

3. Dispositif d'amortissement de vibrations selon l'une des revendications précédentes, **caractérisé par le fait que** le détecteur d'accélération (10) est intégré dans la contre-unité de contact (7).

4. Dispositif d'amortissement de vibrations selon l'une des revendications 1 et 2, **caractérisé par le fait que** le détecteur d'accélération est intégré dans un adaptateur par l'intermédiaire duquel la contre-unité de contact peut être reliée à l'unité de contact d'une façon amovible.

5. Dispositif d'amortissement de vibrations selon l'une des revendications précédentes, **caractérisé par le fait que** le câble de raccordement forme, avec le câble de commande, une unité de câblage (6).

6. Dispositif d'amortissement de vibrations selon l'une des revendications précédentes, **caractérisé par le fait que** l'unité de contact (4) et la contre-unité de contact (7) forment un contact enfichable.

7. Dispositif d'amortissement de vibrations selon l'une des revendications précédentes, **caractérisé par le fait que** l'unité de contact (4) est reliée par l'intermédiaire d'un câble (5) au composant de châssis, l'unité de contact (4) pouvant être fixée d'une façon amovible au composant de châssis.

8. Dispositif d'amortissement de vibrations selon l'une des revendications 2 et 7, **caractérisé par le fait que** l'unité de contact (4) peut être fixée d'une façon amovible à un support du cylindre (1).
